# DEMANDE DE BREVET EUROPEEN

(11) **EP 1 593 537 A1**
(43) Date de publication de la demande: **09.11.2005**
(21) Numéro de dépôt: 05290949.6
(22) Date de dépôt: 29.04.2005
(51) Int. Cl.: B60J 5/14, E06B 3/48

(54) **Volet à lamelles notamment pour ouvrant de véhicule automobile**

(30) Priorité: 05.05.2004 FR 0404842
(71) Demandeur: Peugeot Citroen Automobiles S.A., 78140 Vélizy Villacoublay (FR)
(72) Inventeur: Guinois, Pascal, 91680 Bruyères le Chatel (FR)
(74) Mandataire: Lagrange, Jacques Etienne M.M.

(57) **Abrégé**

Volet à lamelles pouvant coulisser entre une position de fermeture et une position d'ouverture généralement perpendiculaire à la position de fermeture, du type comprenant une pluralité de lamelles (1) articulées entre elles, guidées en translation par des galets (3) coopérant avec au moins un rail (4) de guidage disposé en bordure du volet et comportant deux parties généralement rectilignes (5,6) raccordées par une partie curviligne (7) disposée à la jonction des positions d'ouverture et de fermeture, comprenant en outre, un moyen (8) pour soumettre à un mouvement de rabattement au moment de l'ouverture ou de la fermeture du volet, la lamelle d'extrémité (1) située au voisinage de la jonction entre la position d'ouverture et la position de fermeture, lorsque le volet est fermé.

## Description

La présente invention est relative à un volet à lamelles coulissant pour la fermeture d'une ouverture, par exemple d'une ouverture d'un fourgon d'un véhicule automobile utilitaire.

Certains véhicules utilitaires comportent un fourgon dont l'arrière présente une ouverture fermée par un volet à lamelles coulissant. De tels volets à lamelles sont constitués d'une pluralité de lamelles reliées entres elles de façon articulée et guidées par des galets qui circulent dans des rails de guidages latéraux.

De tels volets peuvent être déplacés entre une position de fermeture et une position d'ouverture. Dans la position de fermeture, généralement verticale, les volets sont abaissés et obstruent l'ouverture qu'ils sont destinés à fermer. Dans la position d'ouverture, les volets sont relevés et dans une position généralement horizontale située sous le pavillon du fourgon du véhicule automobile utilitaire. Pour passer de la position verticale à la position horizontale, le volet doit s'incurver en passant dans une zone arrondie des rails de guidage. Ces zones arrondies présentent l'inconvénient de neutraliser une partie de la hauteur sous pavillon et par conséquent une partie du volume de volume utile du fourgon. Ce volume est neutralisé, notamment parce que la dernière lamelle du volet, c'est-à-dire la lamelle qui se trouve dans la partie haute lorsque le volet est fermé, ne peut être en position verticale, et donc assurer une bonne étanchéité de la fermeture, que lorsqu'elle est entièrement sortie de la partie arrondie du rail de guidage.

Le but de la présente invention est de remédier à cet inconvénient en proposant un volet à lamelles pouvant coulisser entre une position de fermeture et une position d'ouverture d'une ouverture, présentant un encombrement faible lorsque le volet est en position d'ouverture, tout en assurant une bonne étanchéité de la fermeture lorsque le volet est en position de fermeture.

A cet effet, l'invention a pour objet un volet à lamelles pouvant coulisser entre une position de fermeture et une position d'ouverture généralement perpendiculaire à la position de fermeture, du type comprenant une pluralité de lamelles articulées entre elles, guidées en translation par des galets coopérant avec au moins un rail de guidage disposé en bordure du volet, et comportant chacun deux parties sensiblement rectilignes raccordées par une partie curviligne disposée à la jonction des positions d'ouverture et de fermeture, et comprenant, en outre, un moyen pour soumettre à un mouvement de rabattement au moment de l'ouverture ou de la fermeture du volet, la lamelle d'extrémité située au voisinage de la jonction entre la position d'ouverture et la position de fermeture lorsque le volet est fermé.

Le moyen pour soumettre à un mouvement de rabattement la lamelle d'extrémité est constitué par exemple d'au moins une bielle articulée à une première extrémité à la lamelle d'extrémité, et comportant à une deuxième extrémité une tête en saillie latérale, de forme oblongue, coopérant avec une piste de circulation curviligne dont l'extrémité dans laquelle se trouve la tête en saillie latérale lorsque le volet est fermé, est conformée pour assurer un blocage partiel en translation de la bielle et permettre un mouvement en rotation de la bielle.

De préférence, l'axe longitudinal de la tête en saillie de forme oblongue et l'axe longitudinal de la bielle font entre eux un angle aigu.

De préférence, la première extrémité de la bielle est articulée autour d'un axe se prolongeant latéralement au-delà de la lamelle d'extrémité et s'étendant à l'intérieur d'un rail de guidage des galets des volets, et la piste de circulation curviligne est conformée pour que, en position d'ouverture, l'axe autour duquel la bielle est articulée, coopère avec un bord du rail de guidage.

De préférence, la bielle et la piste de circulation de la tête de bielle sont conformées de telle sorte que l'axe autour de laquelle la bielle est articulée, la tête en saillie de la bielle et l'axe de rotation des galets de guidage de la lamelle d'extrémité ne sont pas alignés.

De préférence également, la distance de la tête en saillie de la bielle à la ligne joignant l'axe autour duquel la bielle est articulée et l'axe de rotation des galets de guidage de la lamelle d'extrémité, est maximal lorsque le volet est au voisinage de sa position de fermeture.

Dans les conditions normales d'utilisation, lorsque le volet est en position de fermeture, le corps de la bielle est de préférence perpendiculaire à la lamelle d'extrémité.

L'invention concerne également un ouvrant de véhicule automobile muni d'un volet selon l'invention. Ce volet est de préférence tel qu'en position de fermeture, pour toute température de la plage de température standard d'utilisation de véhicule automobile la lamelle d'extrémité exerce sur un joint d'étanchéité de l'ouvrant une compression.

L'invention va maintenant être décrite plus en détail mais de façon non limitative en regard des figures annexées dans lesquelles :
- la figure 1 est une vue en perspective partielle de la partie latérale haute d'un volet à lamelles en position de fermeture.
- les figures 2A, 2B et 2C, sont des vues en coupe latérale de la partie haute d'un volet à lamelles en position de fermeture et de deux positions intermédiaires d'ouverture.
- La figure 3 est une vue en coupe latérale de l'extrémité supérieure d'un volet à lamelles en position ouverte.
- La figure 4 est une vue de dessus, selon la coupe CC de la figure 2A, d'une lamelle d'extrémité d'un volet à lamelles.
- La figure 5 est une vue en coupe latérale de la lamelle supérieure d'un volet à lamelles en position de fermeture dans des conditions de température élevée.
- La figure 6 est une vue latérale en coupe d'une lamelle d'extrémité d'un volet à lamelles en position de fermeture, à une température basse.

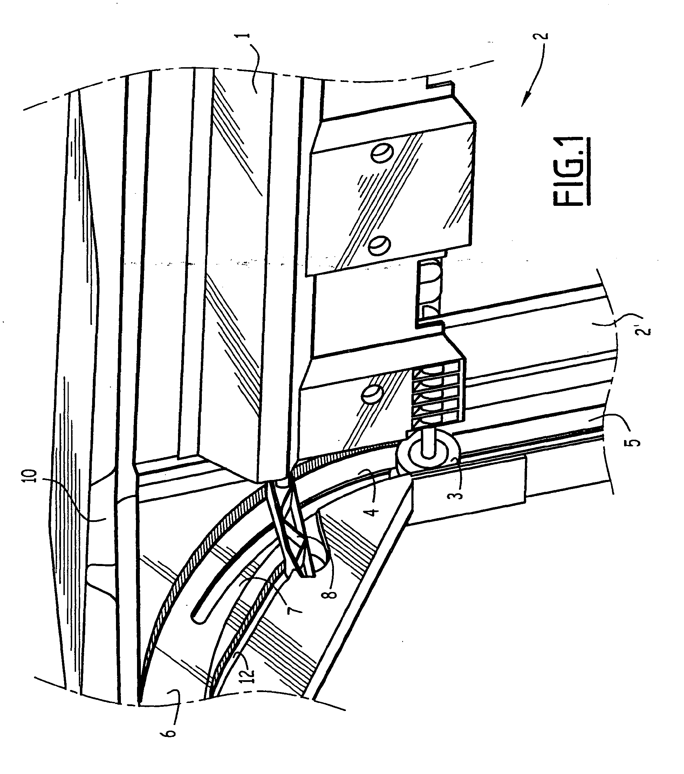

Le volet à lamelles représenté de façon partielle à la figure 1, comporte, lorsqu'il est en position fermée, à sa partie supérieure, une lamelle d'extrémité 1 qui s'étend latéralement en travers d'une ouverture 2 d'un fourgon de véhicule utilitaire (sur la figure, seule la lamelle d'extrémité supérieure est représentée, mais le volet est constitué, de façon connue, d'une pluralité de lamelles disposées en prolongement, vers le bas, de la lamelle d'extrémité). La lamelle d'extrémité 1, comporte dans sa partie inférieure des galets de guidage 3 (sur la figure un seul galet est visible mais la lamelle comporte un galet de chaque côté). Les galets de guidage 3 circulent dans des rails de guidage 4 disposés de part et d'autre de la lamelle 1 et inclus dans les montants latéraux 2' de l'ouverture 2. Chaque rail de guidage 4 comprend d'une part une partie rectiligne sensiblement verticale 5 qui s'étend le long du bord latéral de l'ouverture 2, et d'autre part, une partie rectiligne sensiblement horizontale 6 qui s'étend sous le pavillon 10 du fourgon. Les parties rectilignes verticale 5, et horizontale 6, sont reliées par une partie de raccordement curviligne 7 en forme d'arc de cercle. On notera que les parties rectilignes verticale 5 et horizontale 6, sont en général sensiblement rectilignes car elles peuvent être légèrement incurvées. La lamelle d'extrémité supérieure 1, comporte également, à chacune de ses extrémités supérieures (une seule est visible sur la figure), une bielle 8 dont une extrémité coopère avec une piste de circulation 12. Comme on le verra ultérieurement, la bielle 8 permet, au moment de l'ouverture du volet, de faire basculer la lamelle d'extrémité supérieure 1 et ainsi, permet de prolonger l'ouverture 2 jusqu'au voisinage du pavillon 10, et d'autre part d'assurer une bonne étanchéité de la fermeture par une pression adaptée de la lamelle d'extrémité 1 contre un joint disposé en bordure de l'ouverture 2.

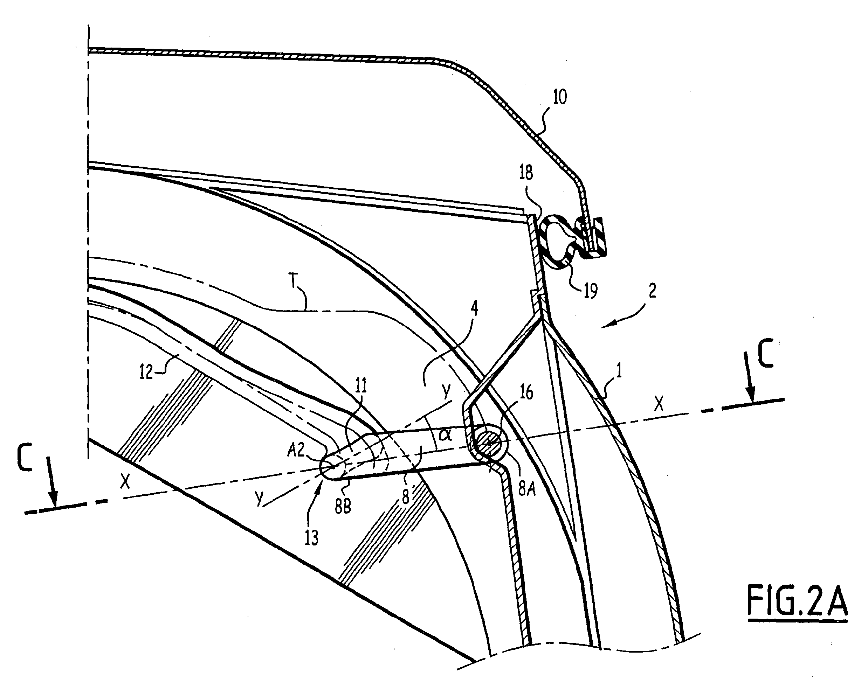

Comme on le voit à la figure 2A, qui représente partiellement la lamelle d'extrémité supérieure en position de fermeture, la bielle 8 est articulée à sa première extrémité 8A à la lamelle d'extrémité 1 par l'intermédiaire d'un axe 16, et comporte, à une deuxième extrémité 8B, une tête en saillie latérale oblongue 11 dont l'axe longitudinal YY forme un angle aigu α avec l'axe longitudinal XX de la bielle. La tête en saillie latérale 11 coopère avec une piste de circulation curviligne 12 disposée dans le montant latéral du véhicule, sous le rail de guidage 4. Cette piste de circulation s'étend depuis une extrémité inférieure 13 située au voisinage du point de jonction de la partie incurvée 7 et de la partie rectiligne verticale 5 du rail de guidage, jusque sous la partie rectiligne horizontale 6 du rail 4. L'extrémité inférieure 13 de la piste de circulation 12, dans laquelle se situe la tête en saillie latérale oblongue 11 lorsque le volet est en position de fermeture, est suffisamment large pour permettre à la tête en saillie latérale oblongue 11 de pivoter, et comporte un cran 14 qui bloque en translation la tête en saillie latérale oblongue 11 de la bielle 8 lorsque la bielle n'a pas suffisamment pivoté par rapport à sa position normale de fermeture dans laquelle l'axe longitudinal XX de la bielle est perpendiculaire à la lamelle d'extrémité 1.

L'extrémité 18 de la lamelle d'extrémité 1 vient en appui contre un joint 19 disposé à la périphérie de l'ouverture du fourgon et porté par le pavillon 10 du fourgon. Cette extrémité 18 de la lamelle d'extrémité 1 en contact avec le joint 19 et écrasant ce joint, assure une bonne étanchéité à la fermeture de l'ouverture par le volet à lamelle.

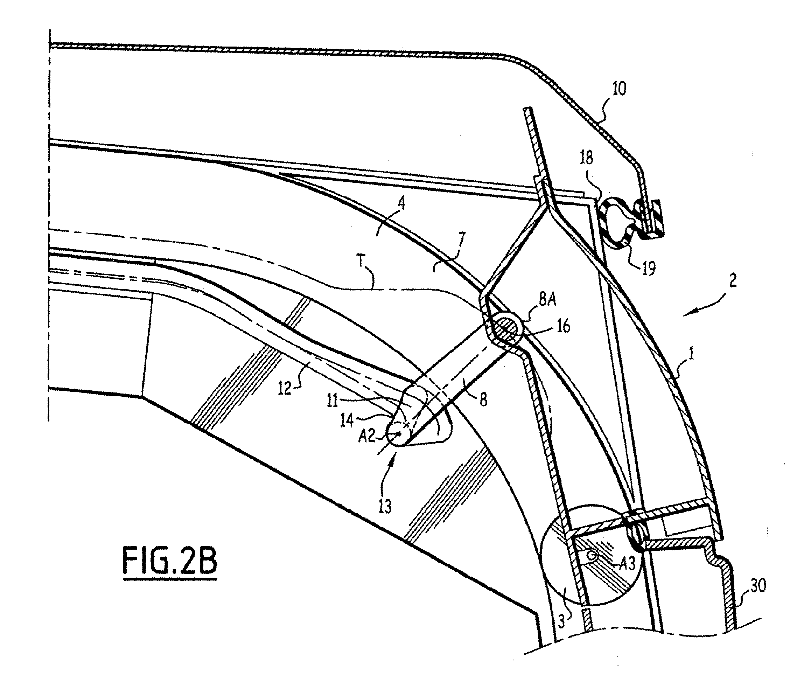

Lorsqu'on ouvre le volet à lamelles, on le soulève, ce qui l'amène d'abord dans une position intermédiaire représentée à la figure 2B, dans laquelle on voit que le galet 3 commence à pénétrer dans la partie de raccordement curviligne 7 du rail de guidage 4, tandis que la tête en saillie latérale oblongue 11 de la bielle 8, qui est dans la partie d'extrémité inférieure 13 de la piste de circulation curviligne 12, butte contre le cran 14, et pivote. C'est d'ailleurs pour permettre ce pivotement que la partie d'extrémité inférieure 13 de la piste circulaire curviligne 12 est relativement large. Ce pivotement de la bielle 8, provoque un basculement de la lamelle 1 dont la partie supérieure 18 se décolle du joint 19 en se déplaçant à l'intérieur du pavillon 10.

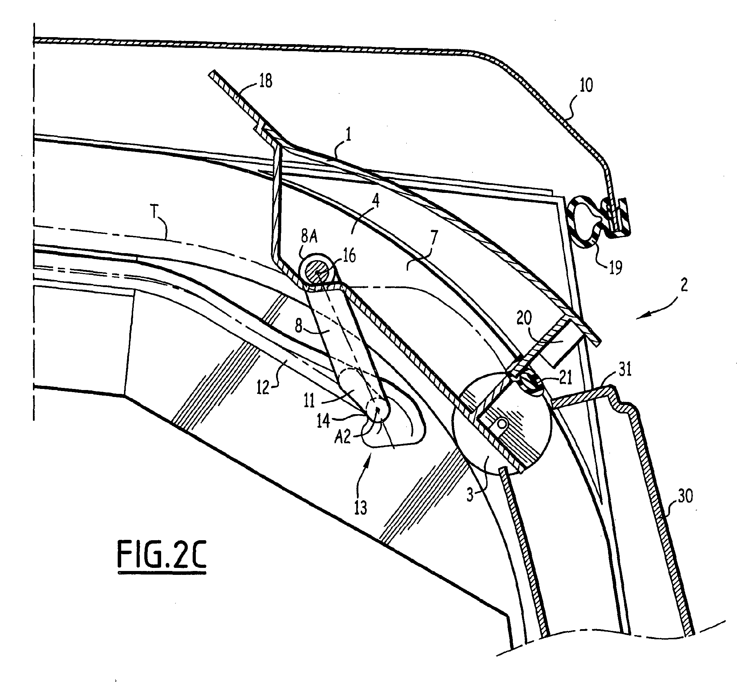

Lorsqu'on poursuit l'ouverture, on amène la lamelle d'extrémité 1 dans la position qui est représentée à la figure 2C, dans laquelle la bielle 8 a basculé d'un angle plus important que dans la position précédente. Dans cette nouvelle position, la tête en saillie latérale oblongue 11 prend une position dans laquelle son axe longitudinal se trouve pratiquement parallèle à la piste curviligne 12, ce qui lui permet de pénétrer et de commencer à glisser dans la piste curviligne 12 dont la largeur est voisine de la largeur de la tête en saillie latérale oblongue 11. Par ce mouvement, la tête en saillie latérale oblongue 11 se dégage du cran 14, ce qui permet de poursuivre le mouvement et de repousser le volet qui vient se mettre en position horizontale sous le pavillon 10.

Comme on le voit sur les figures 2A, 2B et 2C, pendant tout le mouvement l'axe d'articulation 16 de la bielle avec la lamelle 1 suit une trajectoire T qui se situe entièrement à l'intérieur du rail de guidage 4.

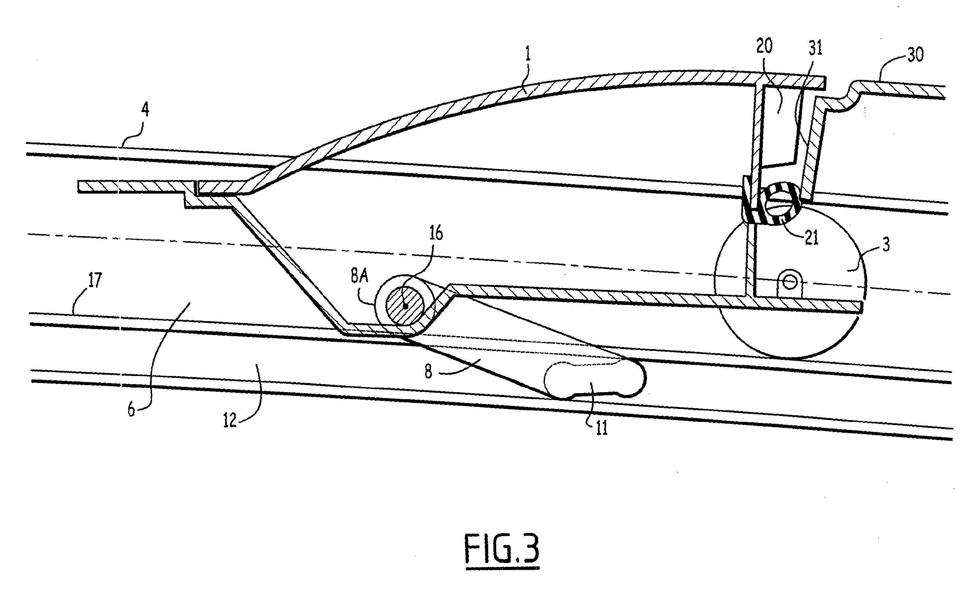

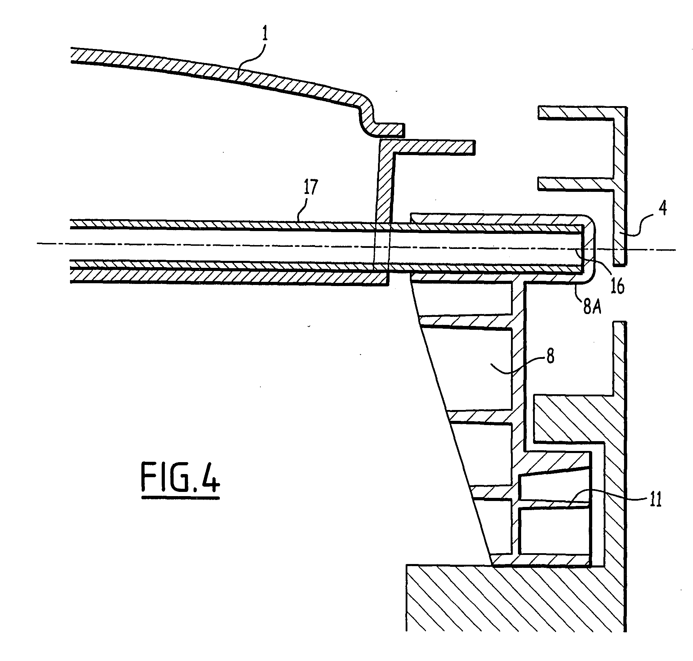

Comme on le voit à la figure 4, l'extrémité 8A de la bielle qui est articulée autour de l'axe 16 constitué par une tige qui s'étend au travers du volet A, se prolonge latéralement de façon à pénétrer dans le rail de guidage 4 du galet 3. De ce fait, et comme on le voit à la figure 3, lorsque le volet est en position horizontale d'ouverture, la lamelle d'extrémité 1 repose d'une part par l'intermédiaire de l'extrémité 8A de la bielle sur une des rives inférieures 17 de la partie rectiligne généralement horizontale 6 du rail de guidage 4, et d'autre part, par l'intermédiaire du galet 3 sur le même bord 17 du rail de guidage. Dans cette disposition la tête en saillie latérale oblongue 11 de la bielle 8 qui se trouve à l'intérieur de la piste de circulation rectiligne 12, est dans une position telle qu'il existe un jeu entre cette tête 11 et les bords de la piste de circulation curviligne 12. Dans ces conditions, le poids de la lamelle d'extrémité 1 est repris par le bord 17 du rail de guidage 4, et aucun effort n'est repris par la tête 11 de la bielle 8 coopérant avec la piste de circulation curviligne 12. Cette disposition est importante car elle permet de faire supporter les principaux efforts qui doivent être supportés pour maintenir le volet en position par le rail de guidage et non pas par la piste de circulation curviligne et par la tête de la bielle 8.

Pour permettre une ouverture et une fermeture facile du volet à lamelles, les dimensions et les positions relatives de la bielle 8, de la lamelle d'extrémité 1, du galet 3, et l'extrémité 13 de la piste de circulation curviligne 12, doivent être telles que l'axe d'articulation 16 de la bielle et du volet A, l'axe de rotation A2 de la tête en saillie latérale oblongue 11 de la bielle coopérant avec l'extrémité 13 de la piste de circulation curviligne 12, et l'axe de rotation A3 du galet 3 de guidage de la lamelle d'extrémité 1 ne soient jamais alignés, de telle sorte que, lorsque l'on exerce un effort de translation sur le volet 1 du haut vers le bas ou du bas vers le haut, il y ait toujours un couple qui assure une rotation facile de la bielle 8 au moment où sa tête 11 arrive dans l'extrémité 13 de la piste de circulation curviligne 12.

Le joint 19 sur lequel l'extrémité 18 de la lamelle 1 vient en appui lorsque le volet est fermé doit être choisi pour avoir un taux d'écrasement suffisant. En effet, le volet de fermeture d'un véhicule utilitaire automobile peut être amené à fonctionner sur une plage de température standard d'utilisation du véhicule qui va de -30°C à +85°C. La température d'utilisation normale étant fixée conventionnellement à 20°C. Sur cette plage de température le volet se dilate de façon très importante, de l'ordre de quelques centimètres, et les dilatations du volet ont pour incidence de modifier la position de la bielle 8 et donc la position de l'extrémité 18 de la lamelle d'extrémité 1.

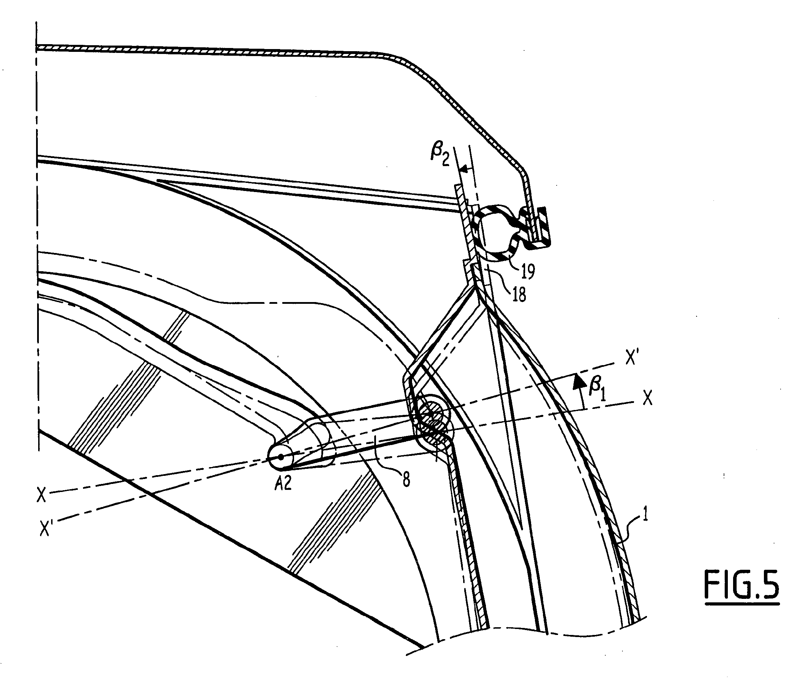

Comme on le voit à la figure 5 qui représente l'extrémité d'un volet lorsqu'il est à une température de 85°C et donc dilaté, l'axe de la bielle 8 qui à la température normale de 20° est XX devient X'X', ce qui représente une rotation d'un angle β1. Cette rotation de la bielle engendre une rotation de la lamelle d'extrémité 1 d'un angle β2 qui se fait vers l'intérieur du véhicule et qui donc tend à décoller l'extrémité 18 de la lamelle d'extrémité 1, du joint 19.

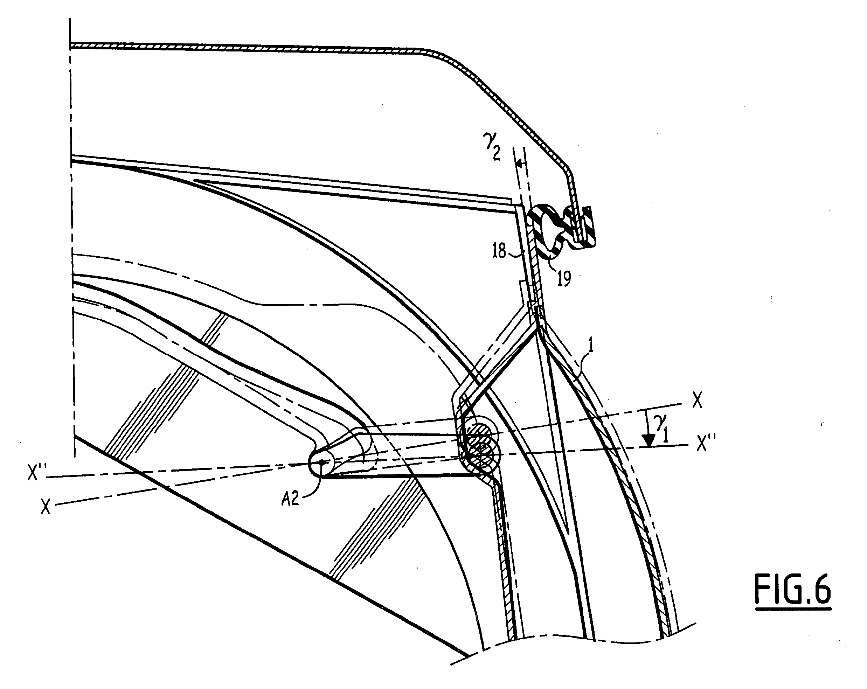

De même, à la figure 6 on a représenté la lamelle d'extrémité 1 du volet en position de fermeture à la température de -30°C. A cette température, la hauteur du volet est réduite. Il en résulte que l'axe longitudinal de la bielle 8 pivote d'un angle de γ1 vers le bas pour passer de XX à X"X". Cette rotation engendre une rotation d'un angle de γ2 de la lamelle supérieure 1 qui, comme dans le cas précédent, tend à rabattre la lamelle vers l'intérieur et donc à la décoller du joint 19.

On notera, au passage, que pour permettre une bonne fermeture du volet à basse température, sans que cela engendre d'efforts de traction parasite, l'extrémité 13 de la piste de circulation 12 doit être conformée pour permettre le pivotement vers le bas de la tête en saillie latérale oblongue 11 de la bielle 8.

Afin d'assurer une bonne étanchéité sur toute la gamme de température d'utilisation du volet de fermeture, les dimensions du joint 19 doivent être choisies pour qu'en position de fermeture normale, le taux d'écrasement du joint 19 par l'extrémité 18 du volet 1 soit suffisante pour absorber les conséquences des dilatations ou des contractions résultant des variations de température du volet.

Afin d'assurer une bonne étanchéité de l'ensemble du volet, la lamelle d'extrémité 1 est conformée le long de sa rive inférieure pour pouvoir coopérer avec une lamelle 30 qui se trouve immédiatement derrière et qui est également articulée sur le galet de guidage 3. En particulier, la lamelle d'extrémité 1 comporte dans cette zone un joint 21 qui peut assurer l'étanchéité des deux lamelles lorsque le volet est en position de fermeture en venant en appui sur l'extrémité 31 du volet adjacent 30. Elle comporte également une butée 20 qui permet à l'ensemble du volet d'avoir un bon comportement mécanique au moment l'ouverture, en venant en appui sur l'extrémité 31 du volet adjacent 30. Cet appui permet de transmettre les efforts de poussée d'une lamelle à l'autre.

Dans l'exemple qui vient d'être décrit, l'ouverture est en position verticale. Elle est ouverte en poussant le volet vers le haut et fermée en tirant le volet vers le bas. De ce fait, la lamelle qui doit basculer au moment de l'ouverture est la lamelle d'extrémité supérieure. Mais l'homme de métier comprendra aisément que toute autre disposition est possible.

Dans tous les cas, la lamelle qui doit pivoter est la lamelle d'extrémité du volet qui, lorsque le volet est fermé, est située dans la zone de passage de la position fermée à la position ouverte.

## Revendications

1. Volet à lamelles pouvant coulisser entre une position de fermeture et une position d'ouverture généralement perpendiculaire à la position de fermeture, du type comprenant une pluralité de lamelles (1, 30) articulées entre elles, guidées en translation par des galets (3) coopérant avec au moins un rail de guidage (4), disposé en bordure du volet, et comportant deux parties sensiblement rectilignes (5, 6) raccordées par une partie curviligne (7) disposée à la jonction des positions d'ouverture et de fermeture, **caractérisé en ce qu'**il comprend, en outre, un moyen (8) pour soumettre à un mouvement de rabattement au moment de l'ouverture ou de la fermeture du volet, la lamelle d'extrémité (1) du volet située au voisinage de la jonction entre la position d'ouverture et la position de fermeture lorsque le volet est fermé.

2. Volet à lamelles selon la revendication 1, **caractérisé en ce que** le moyen pour soumettre à un mouvement de rabattement la lamelle d'extrémité (1) est constitué d'au moins une bielle (8) articulée à une première extrémité (8A) à ladite lamelle d'extrémité (1), et comportant à une deuxième extrémité (8B) une tête en saillie latérale (11), de forme oblongue, coopérant avec une piste de circulation curviligne (12) dont l'extrémité (13) dans laquelle se trouve la tête en saillie latérale (11) lorsque le volet est fermé, est conformée pour assurer un blocage partiel en translation de la bielle (8) et permettre un mouvement en rotation de la bielle (8).

3. Volet à lamelles selon la revendication 2, **caractérisé en ce que** l'axe longitudinal (YY) de la tête en saillie latérale (11) de forme oblongue et l'axe longitudinal (XX) de la bielle font entre eux un angle aigu.

4. Volet à lamelles selon la revendication 2 ou la revendication 3, **caractérisé en ce que** la première extrémité (8A) de la bielle (8) est articulée autour d'un axe (16) se prolongeant latéralement au-delà de la lamelle d'extrémité (1) et s'étendant à l'intérieur d'un rail de guidage (4) des galet des volets.

5. Volet à lamelles selon la revendication 4, **caractérisé en ce que** la piste de circulation curviligne (12) est conformée pour que, en position d'ouverture, l'axe (16) autour duquel la bielle (8) est articulée, coopère avec un bord du rail (17) de guidage (4).

6. Volet à lamelles selon l'une quelconque des revendications 2 à 5, **caractérisé en ce que** la bielle (8) et la piste de circulation (12) de la tête de bielle sont conformées de telle sorte que l'axe (16) autour de laquelle la bielle (8) est articulée, l'axe de pivotement (A2) de la tête en saillie latérale (11) de la bielle (8) et l'axe de rotation (A3) des galets (3) de guidage de la lamelle d'extrémité (1) ne sont jamais alignés.

7. Volets à lamelles selon la revendication 6, **caractérisé en ce que** la distance de la tête en saillie (11) de la bielle (8) à la ligne joignant l'axe (16) autour duquel la bielle est articulée et l'axe de rotation (A3) des galets de guidage (3) de la lamelle d'extrémité (1), est maximal lorsque le volet est au voisinage de sa position de fermeture.

8. Volet à lamelles selon l'une quelconque des revendications 2 à 7, **caractérisé en ce que** dans les conditions de température normale d'utilisation, lorsque le volet est en position de fermeture, le corps de la bielle (8) est perpendiculaire à la lamelle d'extrémité (1).

9. Ouvrant de véhicule automobile **caractérisé en ce qu'**il est muni d'un volet selon l'une quelconque des revendications 1 à 8.

10. Ouvrant selon la revendication 9 **caractérisé en ce qu'**en position de fermeture, pour toute température de la plage de température standard d'utilisation du véhicule automobile la lamelle d'extrémité (1) exerce un effort de compression sur un joint d'étanchéité (19) de l'ouvrant.
